Europäisches Patentamt

**European Patent Office**

**Office européen des brevets**

(11) Veröffentlichungsnummer: **0 049 335**
**B1**

(12) **EUROPÄISCHE PATENTSCHRIFT**

(45) Veröffentlichungstag der Patentschrift:
**03.09.86**

(21) Anmeldenummer: **81105665.4**

(22) Anmeldetag: **20.07.81**

(51) Int. Cl.⁴: **G 06 G 7/70,** G 01 F 9/00

(54) Einrichtung zur Ermittlung des wegspezifischen Kraftstoffverbrauchs.

(30) Priorität: **03.10.80 DE 3037417**

(43) Veröffentlichungstag der Anmeldung:
**14.04.82 Patentblatt 82/15**

(45) Bekanntmachung des Hinweises auf die Patenterteilung:
**03.09.86 Patentblatt 86/36**

(84) Benannte Vertragsstaaten:
**FR GB IT SE**

(56) Entgegenhaltungen:
**US-A-4 157 030**

**CONTROL ENGINEERING, Band 15, Nr. 5, Mai 1968, Seite 64, New York, US, "Simple circuit multiplies analog and digital signals"**

(73) Patentinhaber: **VDO Adolf Schindling AG, Gräfstrasse 103, D-6000 Frankfurt/Main (DE)**

(72) Erfinder: **Schmitt, Günter, Robert- Koch- Strasse 80, D-6233 Kelkheim (DE)**

(74) Vertreter: **Könekamp, Herbert, Dipl.- Ing., Sodener Strasse 9, D-6231 Schwalbach (DE)**

EP 0 049 335 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Einrichtung zur elektronischen Ermittlung des wegspezifischen Kraftstoffverbrauchs eines Fahrzeugs, insbesondere eines Kraftfahrzeugs, aus Volumenimpulsen, deren Pulsfrequenz dem Kraftstoffdurchfluß entspricht, und einer elektrischen Große proportional der Geschwindigkeit des Fahrzeugs, mit einem elektronischen Analog-Dividierer zur Quotientenbildung aus der Pulsfrequenz als Zähler und der geschwindigkeitsproportionalen Größe als Nenner, wobei der Analog-Dividierer einen Kondensater aufweist, der mit einem der Geschwindigkeit proportionalen Strom aufladbar ist und der durch einen elektronischen, gesteuerten Schalter entladbar ist.

Bei bekannten Einrichtungen werden die Volumenimpulse, deren Pulsfrequenz ein Maß für den Durchfluß des Kraftstoffs durch eine Leitung ist, ermittelt und mit einer weg- oder geschwindigkeitsabhängigen Größe in Beziehung gesetzt, um auf den Verbrauch ausgedrückt in 1/100 km zu gelangen. Die hierzu benötigten Recheneinrichtungen sind häufig wegen der verwendeten Digitalbaugruppen und bauelemente noch verhältnismäßig aufwendig, so daß ihre serienmäßige Einführung in die Kraftfahrzeugtechnik nicht ohne weiteres möglich ist obwohl eine Verbrauchsüberwachung generell wünschenswert ist.

Bei einer weniger aufwendigen Einrichtung zur Ermittlung des wegspezifischen Kraftstoffverbrauchs, die trotzdem genau arbeiten soll, tritt insbesondere das Problem auf, daß der wegspezifische Kraftstoffverbrauch in weiten Brenzen variieren kann. Insbesondere nimmt der wegspezifische Kraftstoffverbrauch für kleine Fahrzeuggeschwindigkeiten sehr große Werte an, bei stillstehendem Fahrzeug und laufendem Motor geht dieser Wert gegen unendlich.

Aus der US-A 4 157 030 ist eine etwa der eingangs beschriebenen Einrichtung entsprechende Einrichtung bekannt, die aber einen aufwendigen Aufbau besitzt und durch die der wegspezifische Kraftstoffverbrauch (Weg/ Volumen) berechnet wird.

Weiterhin ist aus "Control Engineering", Band 15. Nr. 5, Mai 1968, Seite 64 eine Schaltung zur Quotientenbildung bekannt, die einen Kondensator, einen gesteuerten Schalter sowie zwei Eingänge für analoge Größen einen Eingang für eine impulsreihe und einen Ausgang für eine impulsreihe liefert, deren Pulsfrequenz von der Eingangsimpulsreihe bestimmt wird.

Aufgabe der Erfindung ist es, eine Einrichtung der Eingangs beschriebenen Art zu schaffen, die unter Einsatz wenig aufwendiger elektronischer Mittel gleichwohl mit - in sinnvollen Grenzen - hoher Genauigkeit arbeitet und insbesondere keine falschen oder irreführenden Werte bei sehr großen wegspezifischen Kraftstoffverbrauchen anzeigt und die wahlweise eine Anzeige der Drehzahl der Antriebsmascnine ermöglicht.

Diese Aufgabe wird durch die Ausbildung der Einrichtung mit den in dem kennzeichnenden Teil des Anspruchs 1 angegebenen Merkmalen gelöst.

Der Wertebereich des Ausgangspulses des erfindungsgemäß eingesetzten Analog-Dividierers kann zwischen Null und einem Maximalwert von nahezu 100 Prozent liegen, der sich durch das Tastverhältnis des Ausgangspulses - Pulsbreite zu Periodendauer - ausdrückt. In besonders vorteilhafter Weise wird mit der erfindungsgemäß vorgesehenen Schaltungsanordnung dafür gesorgt, daß bei Überschreitung der Eingangsgrößen in die Einrichtung zur Ermittlung des wegspezifischen Verbrauchs die an sich ein Tastverhältnis > als 100 Prozent zur Folge haben müßte, dieses Tastverhältnis auf den Maximalwert begrenzt bleibt. Diese Bedingung ist bei normalen Dividierern nicht ohne weiteres erfüllt. ßei der erfindungsgemäßen Einrichtung wird dieses insbesondere durch die Steuerung oes Hysteresisschalters durch die Volumenimpulse in der Weise erreicht daß nach jedem Volumenimpuls jeder Ausgangsimpuls des Hysteresisschalters einen vorgegebenen Wert annimmt, nämlich beispielsweise ein Low-Signal.

Dadurch kann die Einrichtung so ausgebildet werden, daß sie in einem bevorzugten Verbrauchsbereich den Verbrauch sehr genau anzeigt, da keine Rücksicht darauf genommen werden muß, daß außerhalb dieses bevorzugten Bereichs eine völlig falsche Anzeige des Verbrauchs erfolgen kann, da hier der angezeigte Verbrauch in diesem Fall von einem obersten Grenzwert nicht abweichen kann. Darüber hinaus zeichnet sich die Einrichtung durch einen verhältnismäßig geringen Aufwand an Baugruppen und Bauelementer aus, da insbesondere auf einer Analog/Digitalumsetzer oder einen Digital/Analogumsetzer in dem Dividierer verzichtet werden kann.

Wesentlich bei der Mehrfachverwendung der Einrichtung ist, daß der den Zähler bildende Eingang des Analog-Dividierers anstelle der Volumenimpulse nun mit Drehzahlimpulsen beaufschlagt wird und daß der den Nenner bildende Eingang des Analog-Dividierers mit einem Festwert ansteile eines geschwindigkeitsproportionalen Spannungswerts beaufschlagt wird. Je nach der Schaltstellung eines Zweifachumschalters kann somit zwischen Drehzahlanzeige und Verbrauchsanzeige gewählt werden. Zusätzlich läßt sich der Festwert noch in zweckmäßiger Weise für den Betriet von Vierzylindermotoren und Sechszylindermotoren einssellen, so daß ein Typ der Einrichtung durch einfache Anpassung für eine Vielzahl von Fahrzeugtypen geeignet ist. Verbrauch und Drehzahl können dabei auch durch dasselbe Drehspulmeßwerk angezeigt werden, auf dem entsprechende Skalenteilungen vorgesehen sind.

Die erfindungsgemäße Einrichtung ist vorteilhaft weitergebildet durch eine monostabile Kippstufe zur wahlweisen Umformung der Volumenimpulse und der Drehzahlimpulse, die in den elektronischen Schalter und Hysteresisschalter eingespeist werden. Dadurch wird eine genaue Steuerung dieser Schalter unabhängig von der Kurvenform der Impulse gewährleistet.

Vorteilhaft ist die Einrichtung weiter mit der Merkmalen ausgebildet, daß der Kondensator über einen Spannungs/Stromwandler und einen diesem vorgeschalteten Tiefpaß mit Strom beaufschlagt wird, der wahlweise dem an einem elektronischen Tachometer abfallenden Spannunngswert und einer festen Spannung proportional ist. Da dieser Spannungswert bereits an die Wegdrehzahl des Gebers der Wegimpulse und des Kraftfahrzeugs angepaßt ist, können in der Einrichtung zur Ermittlung des Kraftstoffverbrauchs weitere Mittel zur Anpassung an die Wegdrehzahl entfallen.

Wird hingegen kein elektronischer Tachometer vorgesehen so kann der geschwindigkeitsanaloge Spannungswert aus oen Wegimpulsen durch einen zur Wegdrehzahlanpassung einstellbaren Frequenzspannungswandler gewonnen werden.

Der Ausgangspuls an dem Hysteresisschalter des Analog-Dividierers wird zweckmäßig über einen Tiefpaß und einen Spannungs/Stromwandler einem Drehspulinstrument als Anzeigeeinrichtung des Verbrauchs zugeführt. Damit erfolgt in zweckmäßiger Weise eine Umformung des Ausgangspulses in einen Strommittelwert, der ein hierauf abgestelltes Drehspulmeßwerk speist. Anstelle des Tiefpasses kann auch die Trägheit des Drehspulmeßwerks direkt zur Mittelwertbildung ausgenuszt werden.

Die Erfindung wird im folgenden an Hand einer Zeichnung mit 3 Figuren erläutert. Es zeigen:

Figur 1 ein Blockschaltbild der Einrichtung zur Ermittlung des wegspezifischen Kraftstoffverbrauchs und der Drehzehl;

Figur 2 Impulsdiagramme wesentlicher Größen in der Einrichtung nach Figur 1 und

Figur 3 ein detaillierteres Ausführungsbeispiel der Einrichtung nach Figur 1 mit Ausnehme der Elemente zur Drehzehlanzeige.

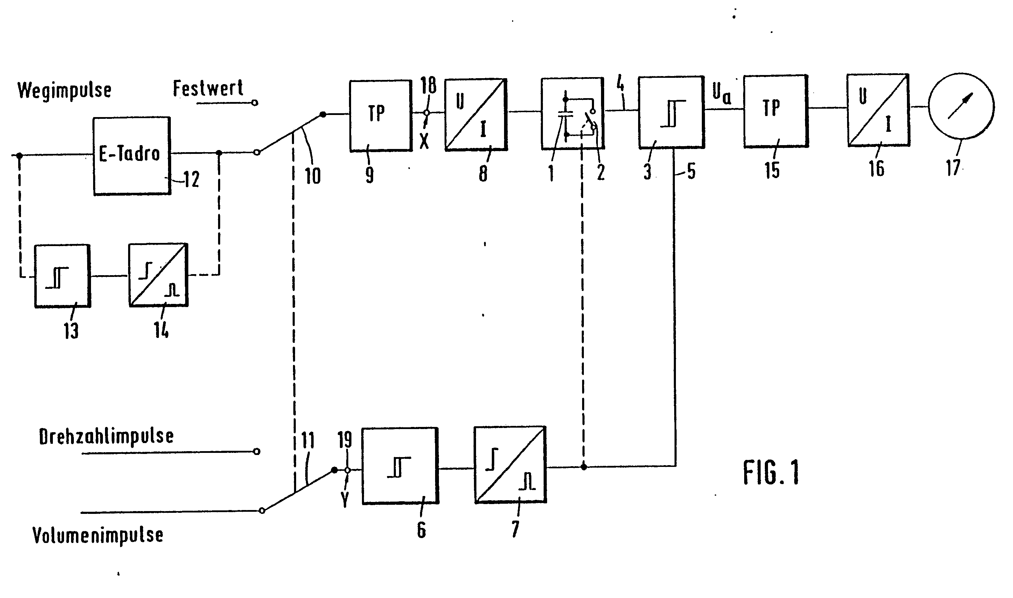

Die Einrichtung nach Figur 1 enthlt als wesentliche Baugruppen einen Analog-Dividierer zur Bildung eines Ausgangspulses $U_a$, dessen Tastwerhältnis ein Maß für den Quotienten ist. Dieser Analog-Dividierer umfaßt einen Kondensator 1 und einen diesem parallel geschalteten elektronischen Schalter 2. Mit der Kondensatorepannung wird ein Hysteresisschalter 3 beaufschlagt. Der Hysteresisschalter ist nicht nur durch die Kondensatorspennung an seinem Eingang 4 steuerbar, sondern weist einen zweiten Steuereingang 5 zur Rückstellung auf. Der elektronische Schalter 2 und der Hysteresisschalter 3 - zweiter Steuereingang - sind durch umgeformte Volumenimpulse steuerbar, die aus eimem Pulsformer gebildet durch einem zweitem Hysteresisschalter 6 und eine monostabile Kippstufe 7 erzeugt werden.

Der Kondensator 1 des Dividierers ist durch einen Strom aufladbar, der aus einem Spannungs/Stromwandler 8 gebildet wird. Dieser Spannungs/Stromwandler steht über einen Tiefpaß 9 mit einer ersten Umschalter 10 in Verbindung, der mit einem zweiten Umschalter 11 gekuppelt ist. In der gezeichneten Schaltstellung des Umschalters 10 verbindet dieser einen elektronischen Tachometer 12, an dem eine der Geschwindigkeit proportionale Spannnung abgreifbar ist, mit dem Tiefpaß 9.

Ist kein elektronischer Tachometer 12 vorhanden, so können Wegimpulse über. einen Frequenz/Spannungswandler mit dem Hysteresisschalter 13 und der monostabilen Kippstufe 14 in Impulse konstanter Impulslänge umgehandelt werden, so daß die über den Umschalter 10 in den Tiefpaß eingespeiste Spannung im Mittelwert ebenfalls der gefahrenen Geschwindigkeit analog ist.

Der eingezeichneten Schaltstellung des ersten Umschalters 10 ist eine Schaltstellung des zweiten Umschalters 11 zugeordnet, in der Volumenimpulse, die von einem Durchflußgeber geliefert werden, im die Einrichttung eingespeist werden.

Zur Anzeige des wegspezifischen Kraftstoffverbrauchs wird der Ausgangspuls $U_a$ über einen zweiten Tiefpaß 15 und einen zweiten Spannungs/Stromwandler 16 als Strommittelwert in das Drehspulinstrument 17 eingespeist.

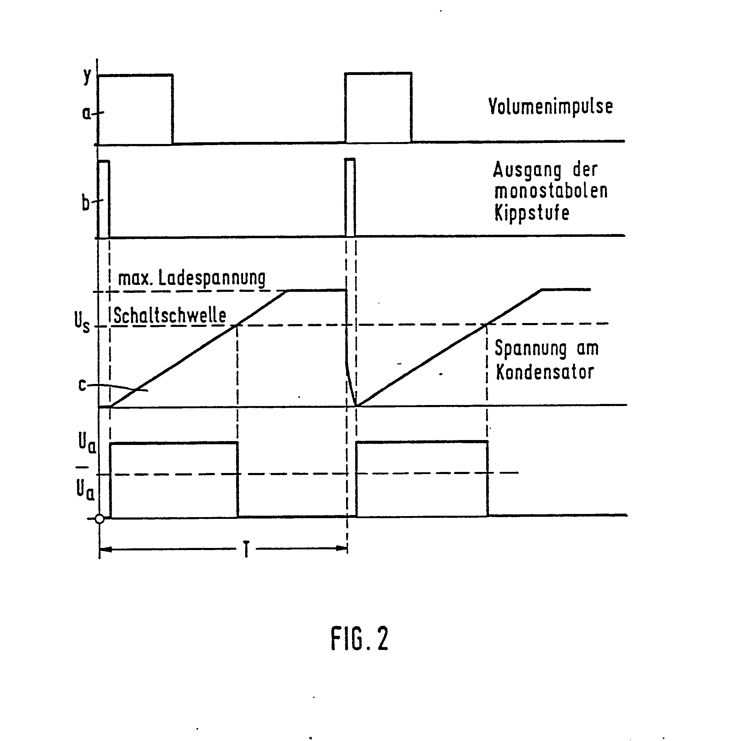

Die Einrichtung nach Figur 1 bildet den wegspezifischen Kraftstoffverbrauch in folgender, unter Hinzunahme der Figur 2 zu erläuternder Weise, so daß der Quotient der Pulsfrequenz y der Volumenimpulse an einer Klemme 19 als Zähler und der geschwindigkeitsanalogen Spannung x an der Klemme 10 als Nenner gebildet wird:

Zum Zeitpunkt Null wird durch eine Vorderflanke eines Volumenimpulses - Impuls a - ein Impuls b am Ausgang der monostabilen Kippstufe 7 abgeleitet, der über den Schalter 2 den Kondensator 1 entladen läßt, so daß die Kondensatorspannung c zunächst Null ist. Der Ausgangspuls $U_a$ des Hysteresisschalter 3 befindet sich dann auf Low-Potential. Nach Verschwinden des umgeformten Impulses b wird der Kondensator durch einen Ladestrom aufgeladen, welcher der geschwindigkeitsproportionalen Spannung x an der Klemme 18 proportional ist. Damit erreicht die Kondensatorspannung mehr oder weniger schnell eine Schwellwertspannung $U_s$, bei der der Hysteresisschalter 3 umschaltet. Der Hysteresisschalter erzeugt seinen Ausgangspuls $U_a$ in der Weise, daß er nach Verschwinden des umgeformten Impulses b zunächst ein High-Signal abgibt, welches so lange anhält, bis die Schwellwertspannung $U_s$ erreicht wird, um dann auf das Low-Signal bzw. Low-Potential abzufallen. Durch die zusätzliche Steuerung des Hysteresisschalters 3 über den Steuereingang 5 wird erreicht, daß der Ausgangspuls am Ende einer Periode T auch darin verschwindet, wenn die Kondensatorspannung noch nicht den Wert $U_s$ erreicht haben sollte, weil die Geschwindigkeit des Fahrzeugs Null oder sehr klein ist. In diesem Fall wird also praktisch das Tastverhältnis 1 - gebildet aus der Dauer eines Impulses $U_a$ zur Periodendauer T erreicht. Die Periodendauer T ist umgekehrt proportional der Pulsfrequenz der Volumenimpulse.

Durch die beschriebene Einrichtung wird der Quotient gebildet:

$$Y = k \cdot \frac{y}{x} = k \cdot \frac{\text{Volumen/Zeiteinheit}}{\text{Weg/Zeiteinheit}} = k \cdot \frac{\text{Volumen}}{\text{Weg}}$$

Somit ist das Testverhältnis, aus dem die Anzeige des Drehspulinstruments 17 abgeleitet wird, proportional dem pro gefahrener Wegstrecke verbrauchten Kraftstoffvolumen.

In der entgegengesetzten Schaltstellung der Umschalter 10 und 11 kann die beschriebene Einrichtung auch dazu verwendet werden, die Drehzahl eines Motors anzuzeigen, dessen Drehzahlimpulse in die Klemme 19 als Größe y Eingespeist werden. Dabei wird der Wert x als Festwert an der Klemme 18 aus einer festen Spannung gebildet.

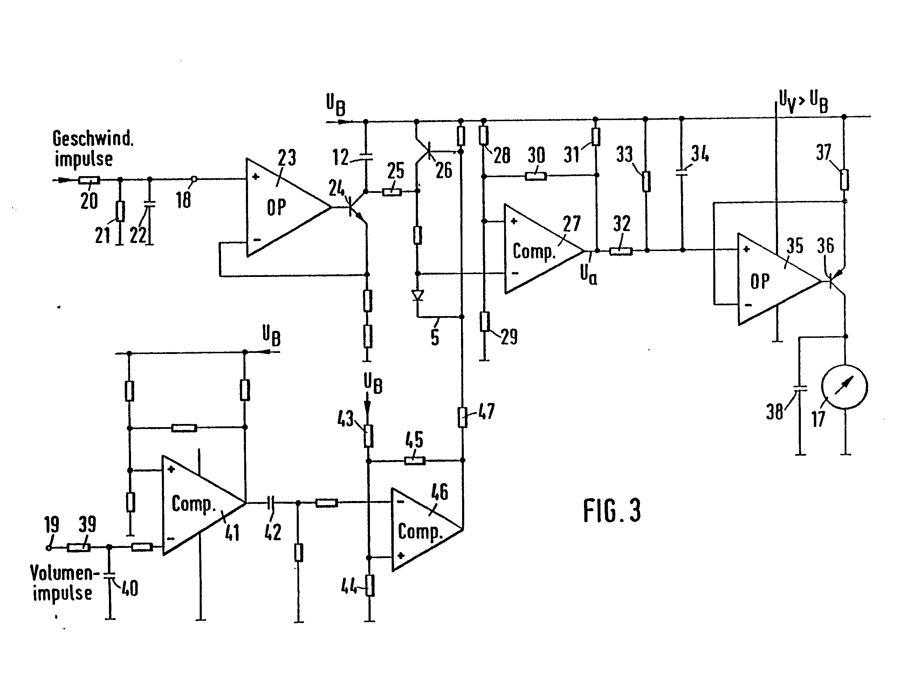

In Figur 3 ist der sich an die Umschalter 10 und 11 zur Bildung des Quotienten der Größen an diesen Umschaltern detaillierter dargestellt, wobei für gleiche Teile übereinstimmende Bezugszeichen verwendet werden:

Der Klemme 16 ist ein aus Widerständen 20, 21 und einem Kondensator 22 gebildete Kombination als Tiefpaß vorgeschaltet. An die Klemme 18 schließt sich ein Spannungs/ Stromwandler an, der aus einem gegengekoppelten Differenzverstärker 23 mit nachfolgenden Transistor 24 besteht. Der Kondensator 1 ist über einen Widerstand 25 und einen als Transistor 26 ausgebildeten elektronischen Schalter entladbar. Die Kondensatorspannung wird über den Hysteresisschalter überwacht, der aus dem Differenzverstärker 27 mit den Widerständen 28, 29, 30, 31, wie im Bild 3 dargestellt, geschaltet ist. Die Ausgangsgröße $U_a$ des Hysteresisschalters wird dem Tiefpaß, gebildet aus den Widerständen 32, 33 und dem Kondensator 34, zugeführt. Von dort gelangt ein dem Mittelwert des Ausgangspulses $U_a$ entsprechender Spannungswert, auf den der Kondensator 34 aufgeladen ist, in einen Differenzverstärker 35 mit dem nachgeschalteten Transistor 36, wobei diese aktiven Elemente zur Bildung einer gesteuerten Stromquelle gegengekoppelt sind. Das Drehspulinstrument 17 wird über den Transistor 36 und einen Vorwiderstand 37 aus der Betriebsspannung $U_B$ gespeist. Die Anzeige des Drehspulinstruments ist zusätzlich durch einen Kondensator 36 geglättet.

Die Volumenimpulse werden über die Klemme 19, eine Widerstandskondensatorkombination 39, 40 in den Hysteresisschalter eingespeist, welcher im wesentlichen mit dem Differenzverstärker 4' gebildet ist, der in praktisch gleicher Weise wie der Differenzverstärker 27 geschaltet ist. Die Ausgangsgröße des Differenzverstärkers 41 wird über einen Koppelkondensator 42 in die monostabile Kippstufe eingespeist, die aus dem entsprechend Figur 3 mit Widerständen 43, 44, 45 geschalteten Differenzverstärker 46 besteht. Die in der monostabilen Kippstufe umgeformten Impulse werden über den Widerstand 47 zur Steuerung des Transistors 26 als elektronischem Schalter und zur Steuerung des Hysteresisschalters über den zusätzlichen Steuereingang 5 weitergeleitet.

## Patentansprüche

1. Einrichtung zur elektronischen Ermittlung des wegspezifischen Kraftstoffverbrauchs eines Fahrzeugs, insbesondere eines Kraftfahrzeugs, aus Volumerimpulsen, deren Pulsfrequenz dem Kraftstoffdurchfluß entspricht, und einer elektrischen Größe proportional der Geschwindigkeit des Fahrzeugs, mit einem elektronische Analog-Dividierer zur Quotientenbildung aus der Pulsfrequenz als Zähler und der geschwindigkeitsproportionalen Größe als Nenner, wobei der Analog-Dividierer einen Kondensator aufweist, der mit einem der Geschwindigkeit proportionalen Strom aufladbar ist und der durch einen elektronischen, gesteuerten Schalter entladbar ist, dadurch gekennzeichnet, daß der Schalter (2) durch die Volumenimpulse steuerbar ist, daß ein Eingang eines Hysteresisschalters (3) mit der Kondensatorspannung beaufschlagbar ist und ein Ausgang des Hysteresisschalters mit einer Anzeigeeinrichtung (Drehspulinstrument 17) in Verbindung steht, daß der Hysteresisschalter ebenfalls durch die Volumenimpulse derart steuerbar ist, daß nach jedem Volumenimpuls jeder Ausgangsinpuls (Ausgangspuls U) des Hysteresisschalters einen vorgegebenen Wert annimmt (Low-Signal), so daß das Tastvernältnis des Ausgangspulses bis zu den Tastverhältnis 1 dem Quotienten proportional ist, daß zur wahlweisen Anzeige einer Drehzahl mit der gleichen Anzeigeeinrichtung der steuerbare Schalter (2) und der Hysteresisschalter (3) über einen ersten Umschalter (11) anstatt mit den Volumenimpulsen mit Drehzahlimpulsen steuerbar sind und daß über einen mit dem ersten Umschalter gekuppelten zweiten Umschalter (10) der Kondensator mit einem Festwert-Strom anstatt des geschwindigkeitsproportionalen Stroms beaufschlagbar ist.

2. Einrichtung nach Anspruch 1, gekennzeichnet durch eine monostabile Kippstufe (7) zur wahlweisen Umformung der Volumenimpulse und der Drehzahlimpulse, die in den elektronischen Schalter (2) und den Hysteresisschalter (3) eingespeist werden.

3. Einrichtung nach Anspruch 1 oder 2, dadurch gekennzeichnet, daß der Kondensator (1) über einen Spannungs/ Stromwandler (8) und einer diesen vorgeschalteten Tiefpaß (9) mit Strom beaufschlagt wird, der wahlweise dem an einem elektronischen Tachometer abfallenden Spannungswert und einer festen Spannung proportional ist.

4. Einrichtung nach einem der Ansprüche 1 bis 3, dadurch gekennzeichnet, daß an den Hysteresisschalter (3)

**0 049 335**

über einen Tiefpaß (15) und einen Spannungs/Stromwandler (16) ein Drehspulinstrument (17) als Anzeigeeinrichtung angeschlossen ist.

**Claims**

1. Apparatus for electronically detecting the fuel consumption per unit of distance travelled of a vehicle, especially a motor vehicle, from volume pulses whose frequency corresponds to the fuel throughflow, and from an electrical variable proportional to the speed of the vehicle, with an electronic analog divider for quotient forming from the pulse frequency as numerator and the speed-proportional variable as denominator, the analog divider having a capacitor which is adapted to be charged with a current proportional to the speed and to be discharged through an electronic controlled switch, characterised in that the switch (2) is controllable by the volume pulses, that one input of a hysteresis switch (3) is adapted to have the capacitor voltage applied to it, and one output of the hysteresis switch is connected to an indicating device (moving coil instrument 17), that the hysteresis switch is also controllable by the volume pulses in such a manner that after each volume pulse each output pulse (output pulse $U_a$) of the hysteresis switch assumes a predetermined value (low signal), so that the duty factor of the output pulse up to the duty factor 1 is proportional to the quotient, that for selective indication of a rotational speed with the same indicating device the controllable switch (2) and the hysteresis switch (3) are controllable with rotational speed pulses instead of with the volume pulses by means of a first change-over switch (11), and that by means of a second change-over switch (10) which is coupled with the first change-over switch there can be applied to the capacitor a fixed-value current instead of the current proportional to speed.

2. Apparatus according to claim 1, characterised by a monostable flipflop (7) for the selective conversion of the volume pulses and the rotational speed pulses which are fed into the electronic switch (2) and the hysteresis switch (3).

3. Apparatus according to claim 1 or 2, characterised in that the capacitor (1) is supplied via a voltage/ current converter (8) and a low-pass filter (9) preceding the latter with current which is proportional selectively to the voltage value falling at an electronic tachometer and to a fixed voltage.

4. Apparatus according to one of claims 1 to 3, characterised in that a moving-coil instrument (17) is connected as indicating device to the hysteresis switch (3) via a low-pass filter (15) and a voltage/ current converter (16).

**Revendications**

Dispositif pour la détermination électronique de la consommation de carburant, spécifique à la distance, d'un véhicule, notamment d'un véhicule automobile, à partir d'impulsions de volume dont la fréquence de répétition d'impulsion, correspond au débit de carburant, et d'une grandeur électrique proportionnelle à la vitesse du véhicule, comportant un diviseur analogique électronique servant à l'établissement du quotient entre 10 fréquence de répétition d'impulsions constituant le numérateur, et la grandeur proportionielle à la vitesse, servant de dénominateur, le diviseur analogique comportant un condensateur qui peut être chargé par un courant proportionnel à la vitesse et qui peut être déchargé par un commutateur életronique comandé, caractérisé en ce que le commutateur (2) peut être commandé par les inpulsions de volume, en ce qu'une entrée d'un commutateur (3) à hysteresis peut être sollicitée par la tension de condensateur, tandis qu'une sortie du commutateur à hystérésis est reliée à un dispositif indicateur (instrument (17) à cadre tournant), en ce que le commutateur à hystérésis peut être également commandé par les impulsions de volume de telle sorte que, après chaque impulsion de volume, chaque impulsion de sortie (impulsion de sortie $U_a$) du commutateur à hystérésis prenne une valeur prédéterminée (signal de niveau bas), de telle sorte que le rapport d'utilisation de l'impulsion de sortie soit proportionnal au quotient jusqu à la valeur 1 dudit rapport, en ce que, en vue d'une indication au choix, d'une vitesse de rotation à l'aide du même dispositif indicateur, le commutateur (2) pouvant être commandé et le commutateur (5) à hystérésis peuvent être commandés, par l'intermédiaire d'un premier inverseur (11), par des impulsions de vitesse de rotation à la place des impulsions de volume et en ce que, par l'intermédiaire d'un second inverseur (10) accouplé au premier inverseur, le condensateur peut recevoir un courant de valeur fixe à la place du courant proportionnel à la vitesse de déplacement.

2. Dispositif selon la revendication 7, caractérisé en ce qu'il est prévu un étage à bascule monostable (7) pour assurer au choix une conversion des impulsions de volume et des impulsions de vitesse de rotation, qui sont emmagasinées dans le commutateur électronique (2) et le commutateur (3) à hystérésis.

3. Dispositif selon la revendication 1 ou 2, caractérisé en ce que le condensateur 1 reçoit, par l'intermédiaire d'un convertisseur (8) tension/courant et d'un filtre passe-bas (9) relié en amont avec celui-ci, un courant qui est sélectivement proportionnel à une valeur de tension provenant d'un tachymètre électronique et à une tension fixe.

4. Dispositif selon l'une des revendications 1 à 3, caractérisé en ce qu'un instrument (17) à cadre tournant servant de dispositif indicateur est relié au commutateur (3) à hystérésis par l'intermédiaire d'un filtre passe-bas (15) et d'un convertisseur (16) tension/courant.

5

Wegimpulse          Festwert

E-Tadro ─12

TP ─9    18 X    U/I ─8    1  2    ⎍ 3 ─5    ⎍ 10    V_a    TP ─15    U/I ─16    17

⎍ ─13    ╱ ─14

Drehzahlimpulse          11  19 Y

⎍ ─6    ╱ ─7

Volumenimpulse

FIG.1

**FIG. 2**

FIG. 3